# EUROPÄISCHE PATENTANMELDUNG

(11) **EP 0 996 218 A1**
(43) Veröffentlichungstag der Anmeldung: **26.04.2000**
(21) Anmeldenummer: 99119460.6
(22) Anmeldetag: 30.09.1999
(51) Int. Cl.: H02K 33/00, H02K 5/22, H02K 11/00, H01R 29/00

(54) **Umschaltbarer Magnet, insbesondere Schwingmagnet**

(30) Priorität: 05.10.1998 DE 29817714 U
(71) Anmelder: REO BORIS VON WOLFF GmbH & Cie., D-10553 Berlin (DE)
(72) Erfinder: Twellsieck, Friedel, 42659 Solingen (DE)
(74) Vertreter: von Puttkamer, Nikolaus, Dipl.-Ing. Patentanwälte Haft, von Puttkamer Berngruber, Czybulka

(57) **Zusammenfassung**

Umschaltbarer Magnet, insbesondere Schwingmagnet mit einer Wicklungsanordung (5) mit mehreren Wicklungen (51, 52), deren Wicklungsenden (512, 513, 521, 522, 523) zu einem Klemmblock (8) geführt sind. Mit dem Klemmblock (8) sind Adapter (7) verbindbar, die durch interne Überbrückungen individuell so codiert sind, daß zwischen den Wicklungsenden (511, 512, 513, 521, 522, 523) der Wicklungen (51, 52) der Wicklungsanordnung (5) jeweils zur Auswahl einer bestimmten Betriebsart individuelle Verbindungen herstellbar sind.

## Beschreibung

Die Erfindung betrifft einen umschaltbaren Magneten, insbesondere einen Schwingmagneten nach dem Oberbegriff des Patentanspruches 1.

Netzbetriebene Schwingfördersysteme für die Vibrationstechnik in der Automatisierungsbranche arbeiten bekannterweise mit schwingmagneten nach dem Anzieh- und Abstoßeffekt. Üblicherweise wird hierbei mit 6000 Schwingungen pro Minute (Vollwelle) oder mit 3000 Schwingungen pro Minute (Halbwelle) gearbeitet. Standardmäßig wird beim Betreiben von Schwingfördersystemen mit Schwingmagneten auch zwischen den Spannungen 230 V in Westeuropa und 115 V in Amerika unterschieden.

Ein weiterer Unterschied wird durch die Standardnetzfrequenzen von 50 Hz oder 60 Hz bedingt. Aus diesem Grunde kann die Abstimmung der Schwingmagnete jeweils nur in dem entsprechenden Land durchgeführt werden oder man hat für die Abstimmung einen ensprechenden Frequenzumrichter von 50 Hz auf 60 Hz, so daß man die Abstimmung im Herstellungsland für den entsprechenden Export für die andere Frequenz durchführen kann.

Aus den voranstehenden Gründen ist es bislang erforderlich, unterschiedliche Magnetsysteme für die Wahl zwischen 6000 und 3000 Schwingungen pro Minute, 230 V und 115 V sowie 50 Hz und 60 Hz zu haben.

Die Aufgabe der vorliegenden Erfindung besteht daher darin, einen Schwingmagneten zu schaffen, der mehrere bzw. alle der zuvor genannten Kriterien erfüllen kann.

Diese Aufgabe wird durch einen Schwingmagneten mit den Merkmalen des Patentanspruches 1 gelöst.

Der wesentliche Vorteil besteht darin, daß der erfindungsgemäße Magnet wahlweise mit 6000 oder 3000 Schwingungen pro Minute (Vollwelle oder Halbwelle) arbeiten kann und mit einer Spannung von 230 V oder 115 V sowie einer Frequenz von 50 Hz oder 60 Hz betrieben werden kann. Vorteilhafterweise ist es dadurch möglich, daß die Abstimmung bei den vorgegebenen Frequenzen optimal im Werk erfolgen kann und daß später am Aufstellungsort des Vibrationssystems diejenigen Betriebsarten gewählt werden können, die am jeweiligen Einsatzort vorherrschen.

Vorteilhafterweise erfolgt die Auswahl der Betriebsarten durch einfaches Umschalten der Spulenanordnung des Schwingmagneten durch einen außenliegenden, für die jeweilige Betriebsart codierten Steckadapter. Anders ausgedrückt können durch Auswahl eines vorbestimmten Steckadapters, der auf eine bestimmte Betriebsart ausgelegt ist und durch Einstecken dieses Steckadapters in einen Steckklemmblock des erfindungsgemäßen Schwingmagneten eine vorgegebene Spannung, eine vorgegebene Frequenz und eine gewünschte Schwingungsfrequenz, auf die der Schwingmagnet jeweils abgestimmt ist, ausgewählt werden.

Im folgenden werden die Erfindung und deren Ausgestaltungen im Zusammenhang mit den Figuren näher erläutert. Es zeigen:
- Figur 1: eine erste Seitenansicht des erfindungsgemäßen Schwingmagneten;
- Figur 2: eine zweite Seitenansicht des erfindungsgemäßen Schwingmagneten;
- Figur 3: eine Ansicht auf den erfindungsgemäßen Schwingmagneten von oben, und
- Figur 4: eine Darstellung der Schaltung der Spulenanordnung des erfindungsgemäßen Schwingmagneten.

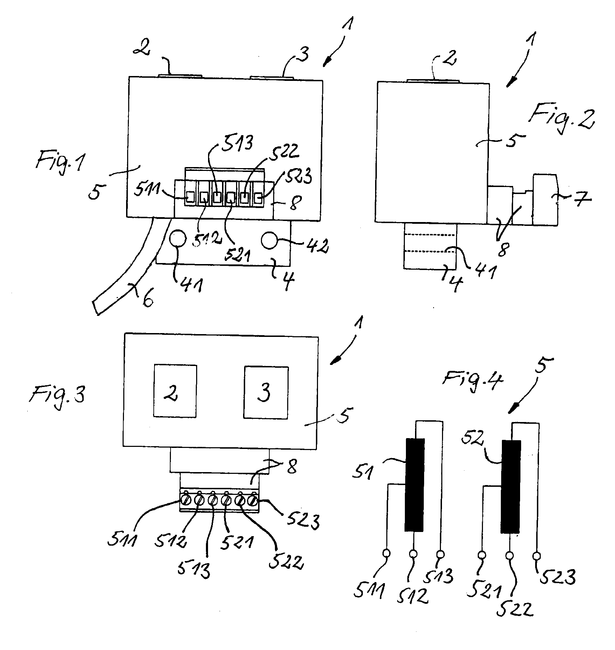

In den Figuren 1 bis 3 ist der erfindungsgemäße Schwingmagnet für die Vibrationstechnik für Schwingfördersysteme, beispielsweise für Sortierförderer, mit 1 bezeichnet. Im wesentlichen besteht der vorliegende Schwingmagnet 1 aus einem Eisenkern 2 bis 4, einer Wicklungsanordnung 5, einem Anschlußkabel 6 (Fig. 1), einem Steckadapter 7 und einem Steckklemmblock 8.

Die Kernanordnung 2, 3, 4 besteht vorzugsweise im wesentlichen aus einem unteren Querteil 4, an die zwei dazu senkrecht verlaufende Schenkel 2, 3 angesetzt sind, so daß sich die Form eines rechteckigen 'U' ergibt. Die Kernanordnung 2, 3, 4 kann durch Stapeln einzelner Bleche in der Richtung senkrecht zur Zeichenebene der Figur 1 gebildet werden. Im unteren Querteil 4 können sich Bohrungen 41, 42 befinden, die zur Befestigung des Schwingmagneten 1 an einem zu betreibenden Schwingsystem, insbesondere einem Schwingfördersystem (nicht dargestellt) dienen.

Die Wicklungsanordnung 5 besteht aus mehreren um die Schenkel 2, 3 herumverlaufenden Wicklungen, vorzugsweise gemäß Figur 4 aus zwei Wicklungen 51, 52, deren Drahtenden nach außen zum Steckklemmblock 8 geführt sind. Dieser ist vorzugsweise in die Vergußmasse des vollvergossenen Schwingmagneten 1 eingegossen. Die entsprechenden Wicklungsenden der Wicklungen 51 und 52 sind in den Figuren 1, 3 und 4 mit 511, 512, 513 bzw. 521, 522, 523 bezeichnet.

In den Steckklemmblock 8 ist ein Steckadapter 7 einsteckbar, der entsprechend den möglichen Betriebsarten codiert ist. Dabei erfolgt die Codierung durch verschiedene Überbrückungen im Steckadapter 7 zur Herstellung von gewünschten Verbindungen zwischen den Wicklungsenden 511, 512, 513, 521, 522, 523 des Steckklemmblockes 8, zur Auswahl bestimmter Systemkombination für die jeweils gewünschte Betriebsart.

Durch Verwendung unterschiedlich codierter Steckadapter ist auch eine nachträgliche Anpassung an eine andere Betriebsart möglich.

Es wird darauf hingewiesen, daß die Erfindung prinzipiell bei allen möglichen Elektromagneten anwendbar ist, deren Spulenanordnungen mehrere Wicklungen für verschiedene Betriebsarten aufweisen.

## Patentansprüche

1. Umschaltbarer Magnet, insbesondere Schwingmagnet mit einer Wicklungsanordung (5) mit mehreren Wicklungen (51, 52), deren Wicklungsenden (512, 513, 521, 522, 523) zu einem Klemmblock (8) geführt sind, dadurch gekennzeichnet, daß mit dem Klemmblock (8) Adapter (7) verbindbar sind, die durch interne Überbrückungen individuell so codiert sind, daß zwischen den Wicklungsenden (511, 512, 513, 521, 522, 523) der Wicklungen (51,52) der Wicklungsanordnung (5) jeweils zur Auswahl einer bestimmten Betriebsart individuelle Verbindungen herstellbar sind.

2. Umschaltbarer Magnet nach Anspruch 1, dadurch gekennzeichnet, daß der Schwingmagnet (1) durch individuelle Adapter (7) auf unterschiedliche Spannungen, Frequenzen und Grundschwingungen umschaltbar ist.

3. Umschaltbarer Magnet nach Anspruch 1 oder 2, dadurch gekennzeichnet, daß der Klemmblock (8) ein Steckklemmblock ist, in den als Steckadapter ausgebildete Adapter (7) einsteckbar sind.

4. Umschaltbarer Magnet nach einem der Ansprüche 1 bis 3, dadurch gekennzeichnet, daß der Klemmblock in der Vergußmasse des Magneten gehalten ist.
